# EUROPEAN PATENT APPLICATION

(11) **EP 2 051 546 A1**
(43) Date of publication of application: **22.04.2009**
(21) Application number: 07020319.5
(22) Date of filing: 17.10.2007
(51) Int. Cl.: H04W 4/00

(54) **Method and device for selecting an anchor point and communication system comprising such device**

(71) Applicant: Nokia Siemens Networks Oy, 02610 Espoo (FI)
(72) Inventor: Luo, Jijun, 81549 München (DE); Xiang, Yikang, 81549 München (DE)
(74) Representative: Bruglachner, Thomas E.

(57) **Abstract**

A method and a device are provided for selecting an anchor point within a network is provided, said anchor point being associated with a user terminal, wherein a condition of the anchor point is considered when the anchor point is selected.

## Description

The invention relates to a method and to a device for selecting an anchor point and communication system comprising such a device.

The public land mobile network (PLMN) in particular comprises two parts, i.e. a core network (CN) and a radio access network (RAN). In a future system, several gateway nodes may be organized together as a set of gateways or as gateway pools in the core network thereby allowing a high processing capability and an improved robustness of the system.

The gateway pool concept is under evaluation for various future PLMN systems, e.g., the 3GPP LTE standardization. The core network of the future system may provide a decentralized structure. Instead of the one-to-many relationship between a radio network controller (RNC) and base stations (BSs) in the 3G network, the gateways and the base stations of the next generation core network may show a many-to-many relationship.

In such an architecture, the gateways may be responsible for routing a user-plane traffic, and to provide local IP addresses for the user terminals connected to the gateways, e.g., via base stations.

The gateway pool concept mainly improves two aspects of the conventional network architecture: First, more gateways are deployed within the network thereby improving network robustness and allowing to share the traffic load. For example, a single gateway failure or malfunction of a gateway would not lead to a significant impairment of the whole network operation. Second, the capacity requirement of a single gateway decreases, so does the cost for such single gateway node.

In addition, if a user terminal performs radio handover between two base stations, the user terminal's gateway association could be maintained.

The gateways may supply the user terminals with IP addresses, wherein each such IP address has to be associated with a single gateway, which is then the current serving gateway for this user terminal.

Changing the user terminal's IP address, however, may require a lot of signaling and re-routing, leading to significant delay and possible packet loss. This, of course is detrimental for active user terminals.

When a user terminal is moving within the control area of the pool of base stations, wherein said pool is associated with at least the gateway the user terminal is connected to, the user terminal could perform a radio handover (change of the serving base station within said pool of base stations) without having to change the serving gateway. Such retaining of the serving gateway greatly reduces the need of changing the user terminal's IP address when said user terminal is in motion.

However, as the link between the gateway and the user terminal associated may be retained for most of the user terminal's active period, i.e., unless the user terminal leaves the pool area of said pool of base stations or the user terminal is switched off, this same gateway has to handle traffic for that particular user terminal for a long time. If several user terminals of this particular gateway simultaneously produce a high traffic volume, the gateway may be congested and overflow may occur. Due to the uneven spatial and temporal distribution of user traffic, the gateways associated with a particular pool of base stations could be each provided with significantly different traffic loads, leading to detrimental congestion situations.

As discussed before, a change of gateway for a particular user terminal leads to significant signaling traffic and shall be avoided. In particular, continuity of the service provided to the user terminal is very important, in particular services of a high Quality-of-Service (QoS) class should not be degraded when active.

The **problem** to be solved is to overcome the disadvantages as set forth above and in particular to provide an approach that allows an efficient utilization of gateways, preferably a mobile-access for gateway load balancing.

This problem is solved according to the features of the independent claims. Further embodiments result from the depending claims.

In order to overcome this problem, a method for selecting an anchor point within a network is provided, said anchor point being associated with a user terminal, wherein a condition of the anchor point is considered when the anchor point is selected.

The condition of the anchor point may comprise an actual condition, a situation, a state or the like of the anchor point.

According to an embodiment, the anchor point comprises, is and/or is associated with a gateway, said gateway being in particular one out of a set or pool of gateways.

The approach suggested allows to avoid uneven and hence detrimental gateway load and congestion in particular by utilizing an initial access phase for the user terminals. Preferably, a gateway-load-dependent initial access for a user terminal is provided that helps to achieve gateway load balancing and thus to significantly reduce the chance of gateway congestion.

In an embodiment, the anchor point is selected for new traffic and/or for established traffic.

In particular, the anchor point is selected during an (initial) access phase of the user terminal.

In another embodiment, the condition comprises an IP address availability.

Hence, the anchor point may be selected to be associated with the user terminal, which anchor point still has a number of IP addresses left.

In a further embodiment, the condition comprises a traffic load criterion.

For example, the anchor point may be selected to be associated with the user terminal that provides the fastest feedback. Such feedback may also or instead provide information regarding the traffic load to be considered for the selection of the anchor point.

In a next embodiment, the user terminal contacts a base station and the anchor point is selected by said base station.

Hence, the base station may be utilized for selecting the anchor point that is (to be) associated with the particular user terminal.

As an option, the base stations may be organized as pools, each pool comprising several base stations and being associated with a set or a pool of gateways. In such scenario, a user terminal may be associated with a particular gateway via a base station of the pool (of base stations). If the user terminal is moving in the area covered by said pool of base stations, the mobile terminal can be handed over to another base station of the pool and still remains associated with its gateway. This bears the advantage that the user terminal does not have to change the gateway and therefore it does not have to be provided with a new IP address thereby avoiding a significant amount of signaling traffic.

Hence, the association between user terminal and gateway may be kept for a considerably long active period of time. According to the approach provided, the selection of said association is preferably done substantially when the user terminal gets connected and hence associated with a gateway. In order to avoid further handovers from one gateway to another, the condition of or at the anchor point, in particular the actual traffic situation at the gateways, is considered when the user terminal is being associated with a particular gateway from a set of gateways.

It is also an embodiment that the base station broadcasts a registration request towards several anchor points and/or towards a set of anchor points.

For example, the base station may obtain a request from a user terminal to be connected to a network. The base station broadcasts towards several gateways a request to get connected. A response from the gateways may be utilized in various ways to select the gateway and hence to establish a load-balancing mechanism.

Pursuant to another embodiment, the base station selects the anchor point providing the fastest feedback.

According to an alternative embodiment, the base station selects anchor point based on traffic load conditions.

Hence, the response from the anchor points may include information relating to the condition of this particular anchor point, e.g., its traffic load situation and/or IP address availability.

According to another embodiment, the base station is repeatedly updated with anchor point conditions.

Hence, it is also possible for the anchor point, in particular for each anchor point, to actively convey information to the base station to further accelerate connection of a user terminal. For example, if the base station is already aware of the conditions of anchor points, a connection request from a user terminal can be processed without significant delay by the base station itself and without any need to launch a separate request towards the anchor points in order to obtain their respective condition.

In yet another embodiment, the anchor point informs the base station about its condition, in particular about a condition change.

According to a next embodiment, a logical entity for supervising the anchor points is provided.

Hence, it is further useful to gather a maintenance and/or control functionality for the anchor points, in particular for the gateways.

Pursuant to yet an embodiment, the logical entity is arranged decentralized, in particular associated with the anchor points. As an alternative, the logical entity may be deployed as a centralized functionality, e.g. as or with a mobility management entity.

According to yet an embodiment, the logical entity decides which anchor point to select pursuant to a current traffic load situation and/or pursuant to a type of traffic.

Hence, in particular the type of traffic to be expected from a particular user terminal can be considered to decide which anchor point to chose. In particular, said type of traffic may be prioritized, in particular according to QoS classes. For example, real-time services with a high QoS need a high degree of availability in the anchor point as well as no significant delay has to be ensured. In contrast, low-priority user traffic, e.g., SMS or MMS, can be associated with anchor points that provide low transfer capacity only.

It is in particular useful to classify or prioritize traffic to be expected or traffic that incurs when the connection is already established. Such prioritized traffic can - at least partially - be handed over in order to balance the load at a particular anchor point. For example, messaging traffic, SMS, MMS or the like, may be handed over to another anchor point with reduced traffic performance, because such traffic may accept more delay than, e.g., voice or video calls.

It is also an embodiment that low priority traffic is handed over from one anchor point to at least one further anchor point.

According to a further embodiment, said low priority kind of traffic comprises traffic that has limited or no real-time constraints, such as in particular:
- SMS traffic;
- MMS traffic;
- Messaging traffic.

The problem stated above is also solved by a device for selecting an anchor point comprising a processor unit that is equipped and/or arranged such that the method as described herein is executable on said processor unit.

According to an embodiment, the device is a communication device, comprising in particular a gateway control function.

The problem stated supra is further solved by a communication system comprising the device as described herein.

Embodiments of the invention are shown and illustrated in the following figures:
- Fig.1: a pool gateway concept comprising two pools of base stations, wherein each pool of base stations is associated with a set (or pool) of gateways;
- Fig.2: a 3GPP SAE/LTE architecture.

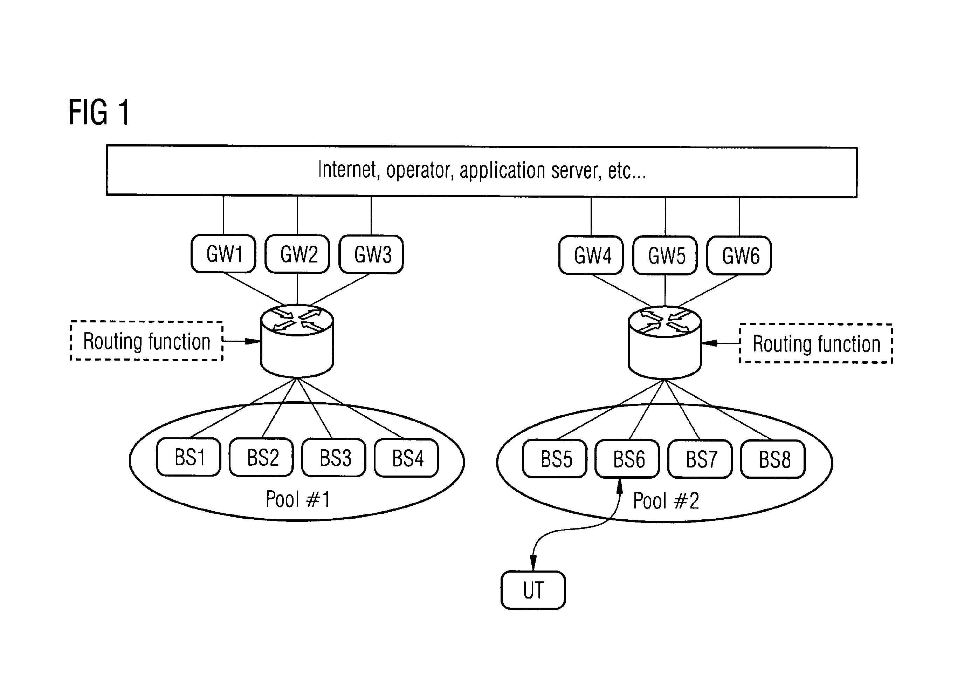

As depicted in **Fig.1****,** a user terminal UT can be connected to a base station BS1 to BS8, wherein base stations BS1 to BS4 are merged in a pool#1 and base stations BS5 to BS8 are merged in a pool#2. A set of gateways GW1 to GW3 is associated with said pool#1 and a set of gateways GW4 to GW6 is associated with said pool#2. Each gateway GW1 to GW6 may be utilized as an anchor point for the user terminal UT.

In particular during an initial access of the user terminal UT, it contacts its serving base station BS, e.g., serving base station BS5 of pool#2. After the user terminal UT has been granted access to the Radio Access Network (RAN) by the base station BS5, it may be registered at a gateway GW for IP connectivity purposes.

Since there are multiple gateways GW4 to GW6 connected to the pool#2 of base stations BS5 to BS8, the base station BS5 has to choose or select one particular gateway for this user terminal UT.

For such selection, the base station BS5 may consider a condition (or at least one condition) of the respective gateway. Such condition may comprise an IP address availability in the gateway's address pool as well as an information regarding the gateway's traffic load.

Preferably, less loaded gateways may be selected. Therefore, however, the base station BS5 needs to be aware of the load situation of the gateways GW4 to GW6 associated with said pool#2.

There are in particular two alternatives to establish an association between the base station BS5 and a gateway (to be selected) for the user terminal UT, in particular during initial access:
a. The base stations may be (e.g., automatically) kept updated about a gateway selection priority, independent of whether or not there is currently an access request from a user terminal UT.
   In such case, the gateways GW4 to GW6 within the set or pool periodically convey their individual load condition to the base stations BS5 to BS8 of the pool#2 (the same applies accordingly to gateways GW1 to GW3 regarding base stations BS1 to BS4 of pool#1).
   If the gateway has high load and is thus temporarily unavailable, it may explicitly send a tag to its associated base stations indicating that further connection are to be refused or indicating a full load condition of the gateway.
   The base stations could implicitly give highest priority to a gateway that has the lowest traffic load.
   During the period of broadcasting each gateway's load information, the base station may forward the registration requests to the committed gateways according to the ratio of the load information among the gateways.
   The following example illustrates as how the mechanism suggested may apply: There are two gateways GW1 and GW2 in a pool, the load ratio between both gateways is as follows:
   Load_GW_1 : Load_GW_2 = 4 : 1;
   Hence, the base station is going to distribute requests from user terminals directed towards those gateways pursuant to a 80:20 ratio. A sequence of gateways for allocating the user terminals may be randomly selected by the base station in order to keep a balanced distribution during the broadcasting period.
b. Alternatively, the base station BS5 may request registration information from the gateways GW4 to GW6 in the pool.
   Pursuant to such request, each gateway GW4 to GW6 that is available for new connections may send back a registration grant to the base station BS5.
   A policy for the base station BS5 could be to select the gateway providing the fastest feedback. However, if the gateway load condition is going to be considered, the gateway feedback may comprise its current traffic load condition. Subsequently, the base station BS5 may select the least-loaded gateway by comparing the traffic load information contained in said feedback.

The first approach (a.) saves time for the user terminal's initial registration as the base stations are already aware of the conditions of the gateways that are associated with the pool.

However, in order to let the base station decide upon consideration of the actual gateway load condition, the base station may advantageously have to wait for the feedback of at least several gateways in order to compare conditions provided by them. This may further slow down registration procedure.

Therefore, a periodic exchange of information between each base station and each gateway may in particular reduce the signaling delay during the access proceedings of the user terminal.

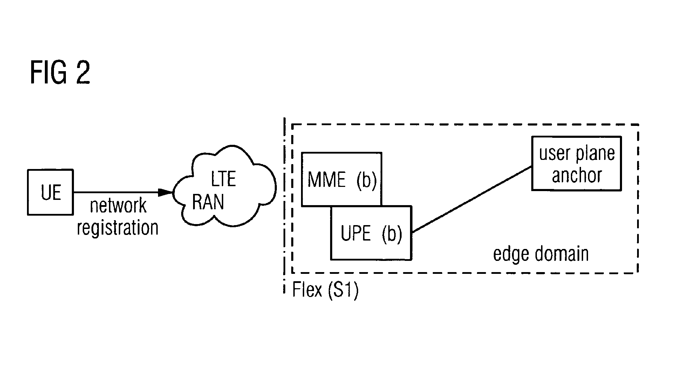

An implementation may, e.g., depend on the 3GPP SAE/LTE architecture (see **Fig.2**).

An SAE/LTE Access System has an MME (Mobility Management Entity) and a UPE (User Plane Entity), see 3GPP TR23.882-190.

An S1 interface bridges between the LTE RAN and the core network (CN). The control plane of the S1 interface is an interface between the base station BS and the MME, the user plane is arranged between the base station BS and the UPE. A user terminal UE (User Equipment) registers with both, the MME and the UPE. The UPE is located in each gateway of the CN, while there may be provided one MME for each gateway pool.

According to the approach provided herewith, the base stations may be periodically informed of the gateways' load information. This is achieved by the gateways repeatedly broadcasting their respective condition, e.g., load information, to all base stations connected.

In particular, if such many-to-many broadcasting traffic leads to too much signaling overhead, the MME could alternatively be utilized as an agent between the base stations and the gateways.

In such a scenario, the gateways only need to periodically convey their condition, e.g., load information, to the MME. The MME could internally make a priority list of gateways, according to their relative traffic load. Then depending on the specific policy, the MME could notify (e.g., via broadcast) the base stations about those gateways that should be used next for accepting new connections. This MME functionality can be provided by the routing function as depicted in Fig.1.

Although the user terminal's traffic load during its active phase may vary, the load-dependent association between user terminal and gateway conducted in particular during the initial access phase helps to achieve gateway load balancing in a predictive and efficient manner.

### Abbreviations:

- 3GPP: Third Generation Partnership Project
- BS: Base Station
- CN: Core Network
- LTE: Long Term Evolution
- MME: Mobility Management Entity
- PDU: Protocol Data Unit
- PLMN: Public Land Mobile Network
- RAN: Radio Access Network
- RNC: Radio Network Controller
- SN: Sequence Number
- TCP: Transmission Control Protocol
- UE: User Equipment
- UM: Unacknowledged Mode
- UMTS: Universal Mobile Telecommunications System
- UPE: User Plane Entity
- UT: User Terminal

## Claims

1. A method for selecting an anchor point within a network, said anchor point being associated with a user terminal, wherein a condition of the anchor point is considered when the anchor point is selected.

2. The method according to claim 1, wherein the anchor point comprises a gateway in particular from a set of gateways.

3. The method according to any of the preceding claims, wherein the anchor point is selected for new traffic and/or for established traffic.

4. The method according to any of the preceding claims, wherein the condition comprises an IP address availability.

5. The method according to any of the preceding claims, wherein the condition comprises a traffic load criterion.

6. The method according to any of the preceding claims, wherein the user terminal contacts a base station and the anchor point is selected by said base station.

7. The method according to claim 6, wherein the base station broadcasts a registration request towards several anchor points and/or towards a set of anchor points.

8. The method according to claim 7, wherein the base station selects the anchor point providing the fastest feedback.

9. The method according to any of claims 7 or 8, wherein the base station selects anchor point based on traffic load conditions.

10. The method according to any of claims 7 to 9, wherein the base station is repeatedly updated with anchor point conditions.

11. The method according to any of claims 7 to 10, wherein the anchor point informs the base station about its condition, in particular about a condition change.

12. The method according to any of the preceding claims, wherein a logical entity for supervising the anchor points is provided.

13. The method according to claim 12, wherein the logical entity is arranged decentralized, in particular associated with the anchor points.

14. The method according to claim 12, wherein the logical entity is arranged centralized, e.g. as a mobility management entity.

15. The method according to any of claims 12 to 14, wherein the logical entity decides which anchor point to select pursuant to a current traffic load situation and/or pursuant to a type of traffic.

16. The method according to claim 15, wherein low priority traffic is handed over from one anchor point to at least one further anchor point.

17. The method according to claim 16, wherein said low priority kind of traffic comprises traffic that has limited or no real-time constraints, such as in particular:
- SMS traffic;
- MMS traffic;
- Messaging traffic.

18. A device for selecting an anchor point comprising a processor unit that is arranged such that the method according of any of the preceding claims is executable on said processor unit.

19. The device according to claim 18, wherein said device is a communication device, comprising in particular a gateway control function.

20. Communication system comprising the device according to any of claims 18 to 19.
